# EUROPÄISCHE PATENTSCHRIFT

(11) **EP 0 202 641 B1**
(45) Veröffentlichungstag und Bekanntmachung des Hinweises auf die Patenterteilung: **07.04.1993**
(21) Anmeldenummer: 86106789.0
(22) Anmeldetag: 17.05.1986
(51) Int. Cl.: F24H 1/28

(54) **Heizungskessel**
Heater
Chaudière

(30) Priorität: 22.05.1985 DE 3518344
(43) Veröffentlichungstag der Anmeldung: 26.11.1986
(73) Patentinhaber: SchiEver GmbH, D-26603 Aurich (DE)
(72) Erfinder: Woltering, Hermann, D-4422 Ahaus (DE)
(74) Vertreter: Patentanwälte Wenzel & Kalkoff

(56) Entgegenhaltungen:
- DE-A- 3 104 344
- FR-A- 1 012 473
- GB-A- 310 611
- US-A- 1 462 018

## Beschreibung

Die Erfindung betrifft einen zweigeteilten Heizkessel gemäß dem Oberbegriff des Anspruchs 1.

Ein Heizkessel dieser Gattung ist in der US-Patentschrift 1,462,018 beschrieben. Die einzelnen Abschnitte des Rauchgaskanales können relativ leicht mit Hilfe einer Bürste oder dergleichen gereinigt werden. Diese bekannte Anordnung der einzelnen Wärmetauscher in großem Abstand weist jedoch einen erheblichen Nachteil auf: Für einen guten Wärmeübergang von dem Rauchgas auf das in den Wärmetauschern strömende Heizmedium sind entweder wesentlich engere Kanäle erforderlich, oder es müssen Wärmetauscher in einer Anzahl bereitgehalten werden, die unwirtschaftlich ist.

Sobald jedoch die lichte Weite zwischen den einzelnen Wärmetauschern des Rauchgaskanales die für die Effizienz notwendige geringe Größe einnimmt, ergeben sich Probleme bei der Reinigung des Rauchgaskanales, da herkömmliche Bürsten oder dergleichen kaum noch eingeführt werden können und vor allen Dingen der Säuberungseffekt so gut wie nicht kontrolliert werden kann.

Es ist deshalb Aufgabe der Erfindung, einen Heizungskessel der bekannten Gattung so zu verbessern, daß die Reinigung des Rauchgaskanales mühelos gelingt, insbesondere das Ablassen des enthaltenen Heizmediums vermieden wird.

Zur Lösung dieser Aufgabe werden die kennzeichnenden Merkmale des Anspruchs 1 vorgeschlagen.

Ein erfindungsgemäßer Heizkessel ist somit zweigeteilt ausgebildet, wobei die beiden Hälften mit einer umlaufenden Dichtung verbunden sind, die im äußeren Bereich des Kessels verläuft. Die Verbindung der beiden Hälften des Heizkessels erfolgt vorteilhaft mittels Schrauben, die als Schnellverschlußschrauben ausgebildet sein können. An jeder Hälfte und an je einer der einander gegenüberliegenden und zum Heizungsinnenraum weisenden Wände des Heizungskessels sind das Heizungsmedium führende Wärmetauscher angeformt, die jeweils etwas kürzer als der lichte Innenraum des Heizungskessels sind und somit in einem vorbestimmten Abstand vor der gegenüberliegenden Wand der zweiten Kesselhälfte enden.Die Wärmetauscher an jeder der beiden Hälften sind so an den Wänden befestigt, daß diese gegeneinander versetzt angeordnet sind und somit,ebenfalls mit Ausnahme der Randbereiche, ineinandergreifen, so daß jeweils ein Wärmetauscher einer Wand zwischen zwei Wärmetauschern der gegenüberliegenden Wand zu liegen kommt. Diese Wärmetauscher, die an jeder Wand angeordnet sind, sind untereinander über Verbindungsleitungen verbunden, wobei jede Hälfte des Heizungskessels mit einem Heizungsvor- und -rücklauf verbunden ist. Zwischen den fingerartig ineinandergreifenden Wärmetauschern der beiden gegenüberliegenden Wände sind die Abgaskanäle ausgebildet, die eine zwangsweise Rauchgasführung vom Brenner zur Abgasöffnung gewährleisten. Das Heizungsmedium wird dabei im Gegenstrom durch die Wärmetauscher geführt, so daß der Heizungseinlauf im Bereich der Abgasöffnung und der Heizungsvorlauf im Bereich der Brenneröffnung liegt. Das Gegenstromprinzip ist für sich gesehen bekannt von anderen Wärmetauschern.

Gemäß einer vorteilhaften Ausführungsform können die Wärmetauscher in Form von Ringen ausgebildet sein, wobei jeweils benachbarte Ringe der einen Hälfte untereinander über Verbindungsleitungen verbunden sind. Das Heizungsmedium wird also jedem Ring über eine Leitung zugeführt, die vorteilhaft in der zugeordneten Wandung selbst ausgebildet sein kann. Das Heizungsmedium durchströmt dann den Ring, der an einer Stelle unterteilt ist, an der die Ableitung des Heizungsmediums auf diese speziellen Wärmetauscher erfolgt, wobei dann das Heizungsmedium über die Verbindungsleitung in den benachbarten Wärmetauscher eingeführt wird. Bei einem Heizungskessel mit aus konzentrischen Ringen gebildeten Wärmetauschern ist die Brenneröffnung wie auch die Rauchgasöffnung in der Mitte des Heizungskessels an seinen gegenüberliegenden Hälften ausgebildet, wobei die Rauchgasführung mäanderförmig zwischen den ringförmigen Wärmetauscherelementen von der Mitte des Heizungskessels zu seinen Außenflächen hin geführt wird. Hier wird das Rauchgas gesammelt und an der Außenseite einer Wand des Heizungskessels zur Rauchgasöffnung geführt

Gemäß einer weiteren Ausführungsform können die Wärmetauscher auch in Form von Schubladen ausgebildet sein, die sich von jeder Hälfte erstrecken, wobei die Schubladen im Innern jeweils mit einer Trennwand versehen sind, die eine Strömung des Heizungsmediums von der Wand bis zur Schubladenspitze erzwingt, wobei dann die Strömungsrichtung umgekehrt und wieder zur Wand zurückgeführt wird . Die eizelnen Schubladen sind untereinander wieder mit Verbindungsleitungen verbunden. Diese Schubladen, die jeweils an den gegenüberliegenden Wänden angeordnet sind, greifen ineinander, wobei diese wiederum in einem vorbestimmten Abstand vor der gegenüberliegenden Wand enden. Zwischen diesen Wärmetauschern wird wiederum der Rauchgaskanal gebildet, der eine zwangsweise Rauchgasführung von der Brenneröffnung zur Rauchgasöffnung bewirkt.

Weitere vorteilhafte Ausgestaltungen der Erfindung gehen aus den Unteransprüchen in Verbindung mit Beschreibung und Zeichnung hervor.

Zwei Ausführungsbeispiele der Erfindung sind im folgenden anhand der Zeichnung näher beschrieben, in dieser zeigen:
- Fig. 1: einen Querschnitt durch eine Ausführungsform eines erfindungsgemäßen Heizungskessels,
- Fig. 2: einen Schnitt entsprechend Fig.1, jedoch in demontiertem Zustand,
- Fig. 3: einen Querschnitt durch den in Fig 1 dargestellten Heizungskessel, auf die Brenneröffnung hin gesehen,
- Fig. 4: einen Querschnitt durch den Heizungskessel nach Fig. 1, auf die Abgasöffnung hin gesehen,
- Fig. 5 und 6: je eine Seitenansicht des Heizungskessels gemäß Fig. 1,
- Fig. 7: in Draufsicht in schematischer Darstellung den Heizungswasserverlauf,
- Fig. 8: ein weiteres Ausführungsbeispiel eines erfindungsgemäßen Heizungskessels im Schnitt,
- Fig. 9: einen Querschnitt durch ein Element eines Heizungskessels gemäß Fig. 8,
- Fig. 10: eine Seitenansicht auf die Frontseite des Heizungskessels mit der Tür,
- Fig. 11: die gleiche Ansicht wie Fig. 10, jedoch mit geöffneter Tür und
- Fig.12: eine Seitenansicht des Heizungskessels im demontierten Zustand.

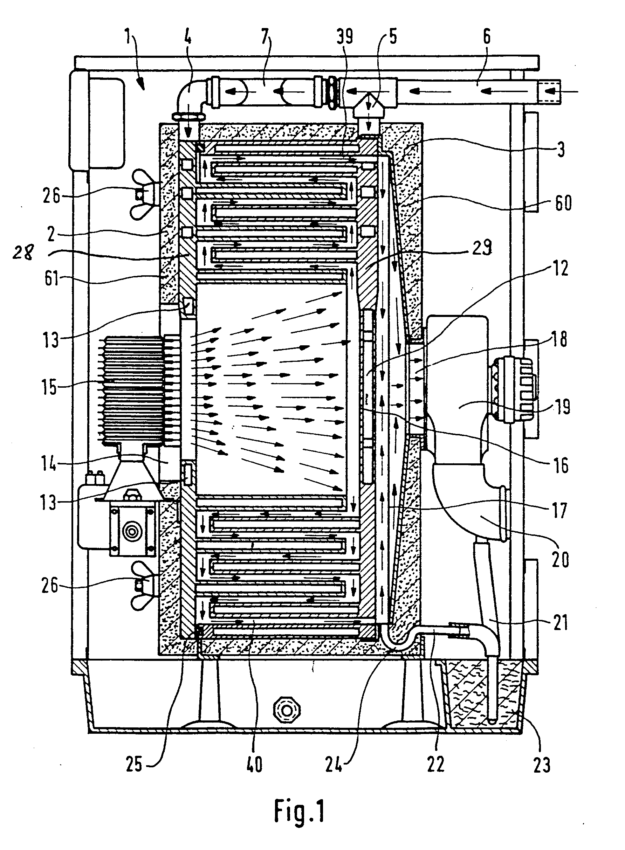

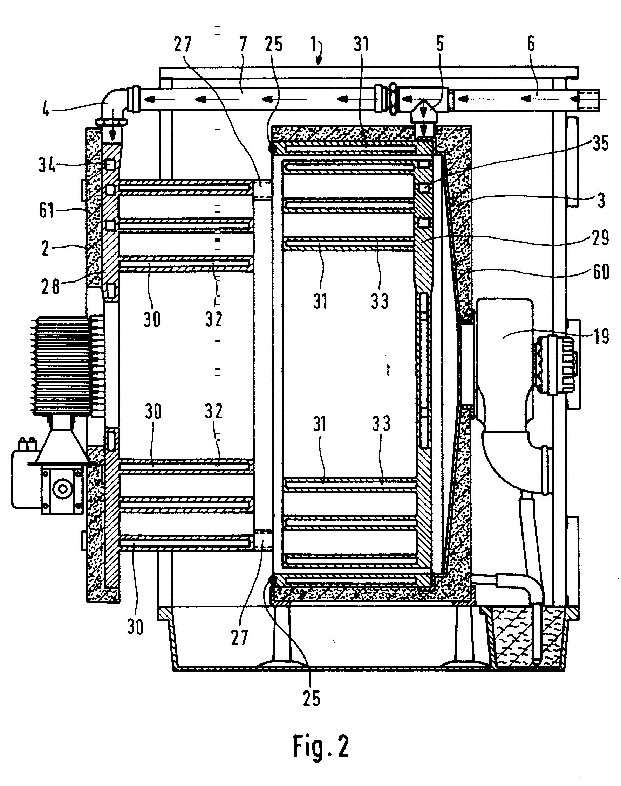

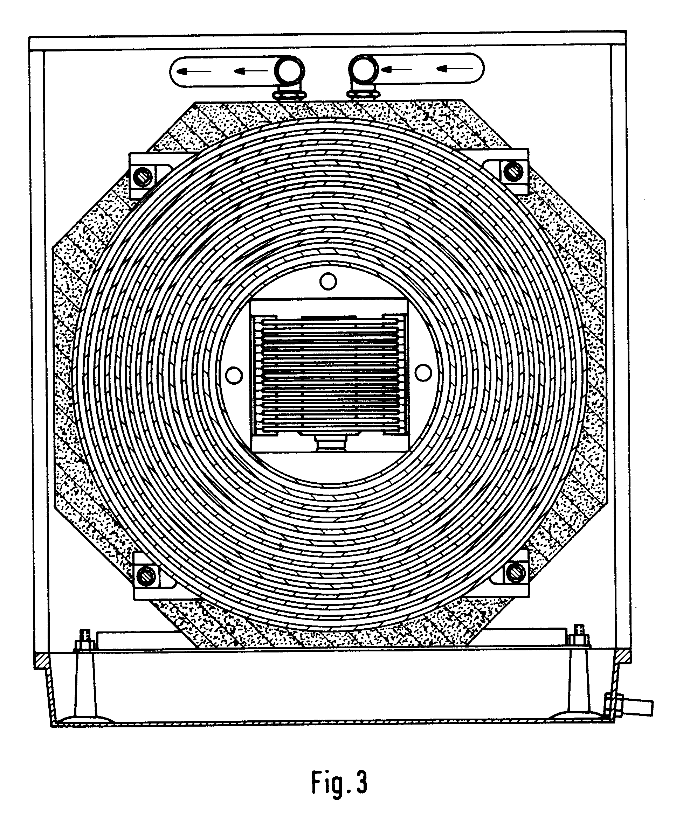

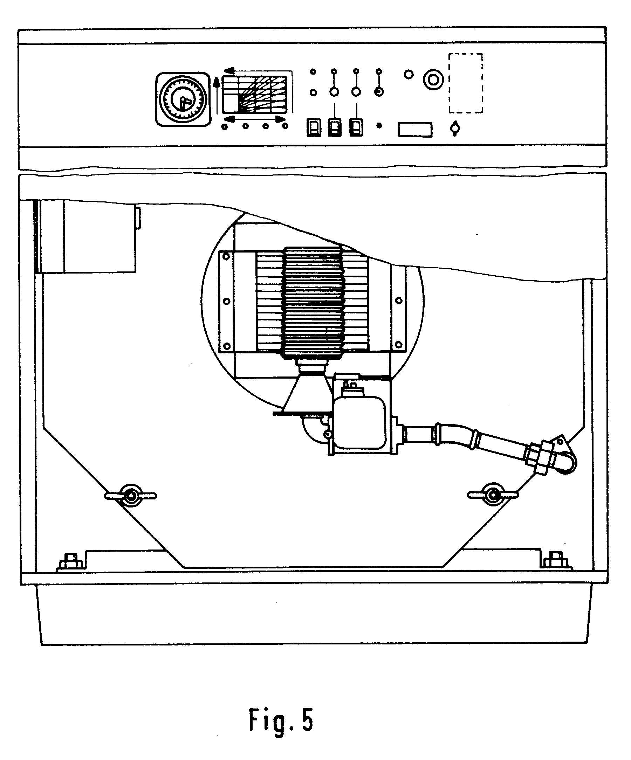

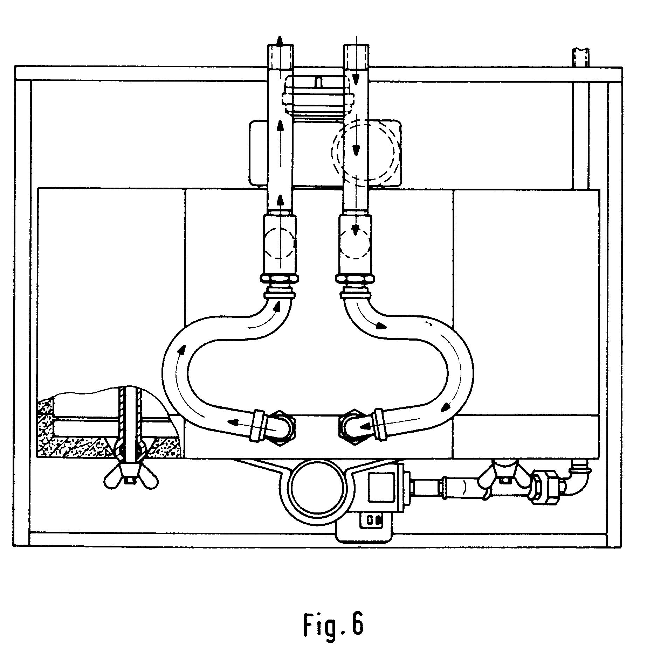

Der in den Fig. 1 bis 6 dargestellte Heizungskesssel 1 besteht aus zwei Hälften 2, 3, die beide an den Heizungsrücklauf 6 angeschlossen sind. Die Anschlußleitung 5 ist unmittelbar an den Heizungsrücklauf 6 angeschlossen, während die Verbindung zur Anschlußleitung 4 durch einen flexiblen Gummischlauch 7 erfolgt. In Fig. 2 sind die beiden Hälften 2, 3 voneinander abgerückt, wobei der flexible Gummischlauch 7 voll ausgezogen ist. Die Anschlußleitungen 4, 5 sind mit Drehkupplungen verbunden, so daß die beiden Hälften 2, 3 auch gegeneinander verdreht werden können, so daß diese jeweils von der Innenseite her zugänglich sind.

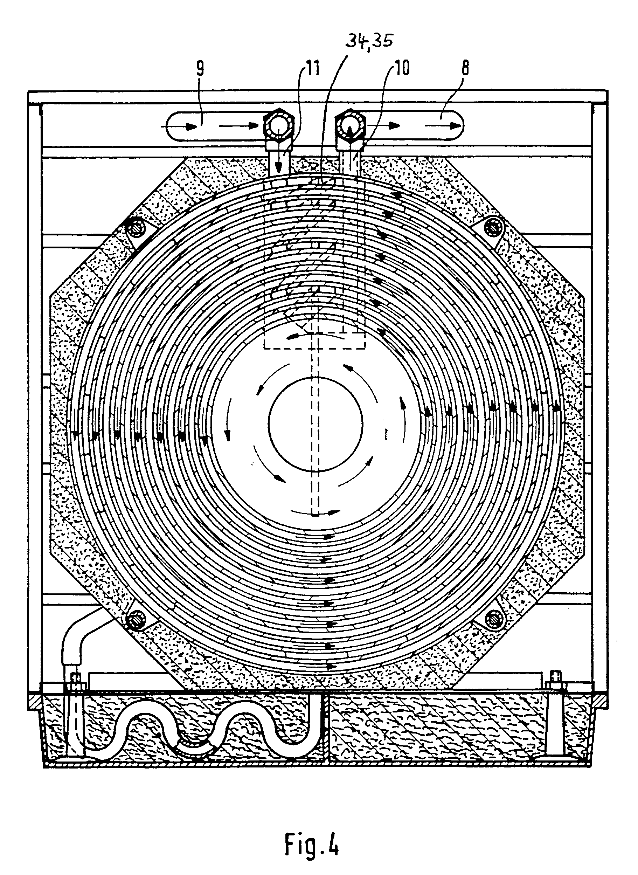

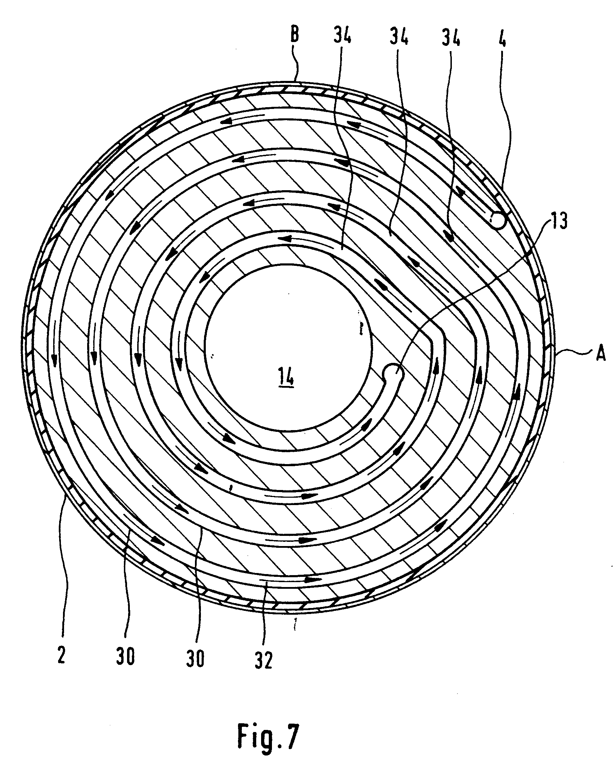

Der Heizungsvorlauf 8, 9, der in Fig. 4 dargestellt ist, ist über Leitungen 10, 11 an den mittig liegenden Anschlußstellen 12 (Fig. 1), 13 (Fig.7) angeschlossen.

In der Hälfte 2 ist mittig eine Öffnung 14 angeordnet, an die ein Brenner 15 angeschlossen ist. Die gegenüberliegende Wand 16, gegen die die Brennerflamme schlägt, ist wassergekühlt. Im Anschluß an diese Wand 16 ist ein Rauchgaskanal 17 angeschlossen, der die am Umfang austretenden Rauchgase sammelt und einer zentralen Öffnung 18 zuführt. Für den Abtransport der Rauchgase dient ein Abgasventilator 19, der die Gase über einen Abgasbogen 20 einer nicht weiter dargestellten Abgasleitung zuführt. An der tiefsten Stelle des Abgasbogens 20 ist eine Leitung 21 für die Abführung des Kondensats angeschlossen. Eine weitere Leitung 22 ist an der tiefsten Stelle des Rauchgaskanals 17 angeschlossen; sie führt das Kondensat wie auch die Leitung 21 einer Kondensatsammelwanne 23 zu. In der Leitung 22 ist ein Krümmer 24 eingebaut, der als Geruchverschluß dient. Beide Hälften des Heizungskessels 1 sind mit einer Isolation 60, 61 versehen, die mit Ausnahme der Öffnungen 14 und 18 den Heizungskessel 1 vollständig umgeben. Die beiden Hälften 2, 3, die im wesentlichen ringförmig ausgebildet sind, sind über eine umlaufende Dichtung 25 gegeneinander abgedichtet, wobei die beiden Hälften 2, 3 mittels Muttern 26 miteinander verbunden sind, die auf Gewindebolzen 27 aufgeschraubt sind, die an der Hälfte 3 befestigt sind. Hierdurch ist eine schnelle Trennung der beiden Hälften möglich, was im Hinblick auf die Wartung vorteilhaft ist.

Jede der beiden Hälften 2, 3 ist mit einer im wesentlichen kreisförmigen Wand 28, 29 versehen, an der ringförmige Wärmetauscher 30, 31 angeformt sind,die jeweils einen Hohlraum 32, 33 einschließen. In jeder der Wände sind mehrere Verbindungskanäle 34, 35 angeordnet, die das über den Heizungsrücklauf 8 zugeführte Wasser zunächst den außen liegenden ringförmigen Wärmetauschern 30, 31 jeder Hälfte 2, 3 zuführen. Das Wasser strömt durch diese Wärmetauscher, die durch eine in den Hohlraum 30, 33 eingesetzte Trennwand in zwei Hälften unterteilt sind. Das aufzuheizende Wasser strömt somit durch den Verbindungskanal 34, 35 in den Hohlraum 32, 33, wobei die Strömungsrichtung durch die Trennwand vorgegeben wird. Das Medium strömt dann in dem ringförmigen Wärmetauscher bis zur anderen Seite der Trennwand und wird hier über einen weiteren Verbindungskanal, der näher zum Zentrum liegt und den jeweils vorhergehenden ringförmigen Wärmetauscher mit dem nachfolgenden ringförmigen Wärmetauscher verbindet, in den nachfolgenden ringförmigen Wärmetauscher 30, 31 geleitet . Der Vorgang setzt sich solange fort, bis das Wasser den innerste ringförmigen Wärmetauscher 30 erreicht hat, um dann anschließend über die Anschlußstellen 12, 13 dem Heizungsvorlauf 8, 9 zugeführt zu werden. Das Wasser strömt also vom Heizungsrücklauf 6 über die in den Wänden 28, 29 angeordneten Verbindungskanäle 34, 35 und über die ringförmigen Wärmetauscher 30, 31 zu den zentral angeordneten Anschlußstellen 12, 13 für den Heizungsvorlauf. Die Heizgase strömen entgegengesetzt der Strömungsrichtung des Wassers, d.h. vom zentralen Brennraum 38 zu den an der Peripherie liegenden Rauchgaskanälen 39, 40 und von dort in den Rauchgaskanal 17. Das zu erwärmende Wasser wie die Rauchgase haben somit eine entgegengesetzte Strömungsrichtung, wobei im Bereich der heißesten Rauchgase der Heizungsvorlauf angeordnet ist, während der Heizungsrücklauf im Bereich der kalten Rauchgase liegt.

Wie aus den Figuren hervorgeht, sind die ringförmigen Wärmetauscher jeder Hälfte 2, 3 versetzt gegeneinander auf jeder Seite derart angeordnet, daß die ringförmigen Wärmetauscher 30 einer Hälfte zwischen die ringförmigen Wärmetauscher 31 der anderen Hälfte geschoben werden können. Die Tiefe dieser ringförmigen Wärmetauscher ist so gewählt, daß diese, wie dies insbesondere auch aus Fig. 1 ersichtlich ist, kurz vor der gegenüberliegenden Wand 28 bzw. 29 der gegenüberliegenden Hälfte enden. Der Rauchgaskanal wird somit durch die Oberflächen der jeweiligen ringförmigen Wärmetauscher begrenzt, die eine mäanderförmige Rauchgasführung erzwingen, wie dies in Fig. 1 durch Pfeile angedeutet ist.

Ein erfindungsgemäßer Heizkessel besteht somit aus zwei Hälften,die mittels weniger Schrauben und einer Dichtung miteinander verbunden sind, so daß diese leicht demontierbar und somit leicht zugänglich und zu reinigen sind. Darüberhinaus sind die ringförmigen Wärmetauscher in einfacher Weise zu fertigen und im Hinblick auf vergleichbare Heizkessel wesentlich kostengünstiger herzustellen.

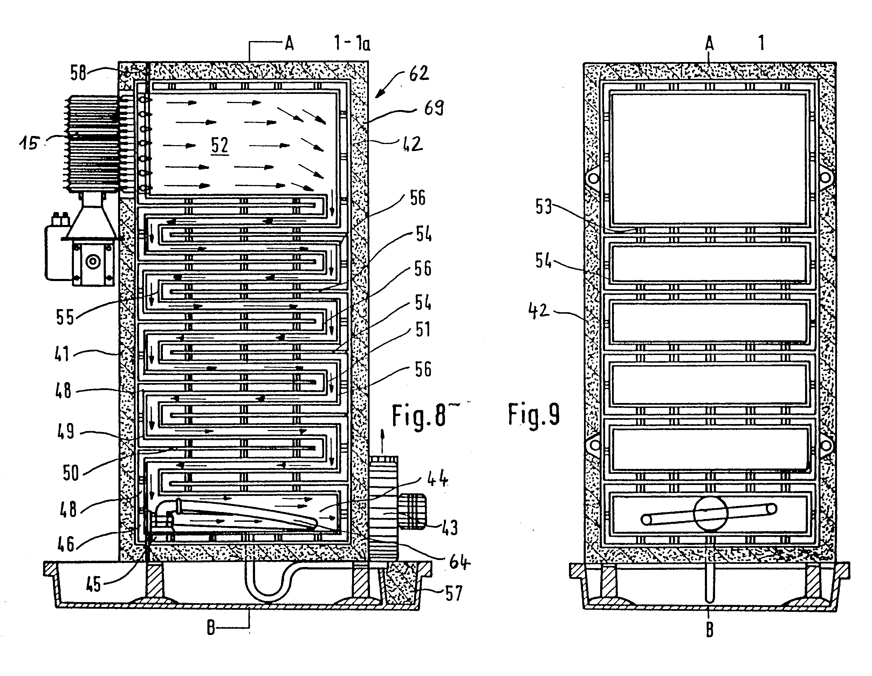

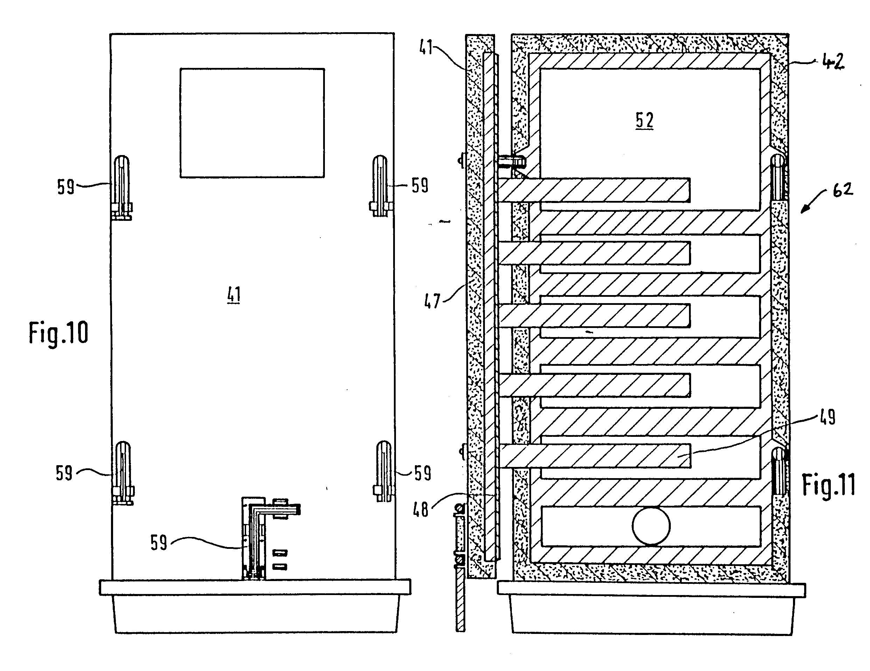

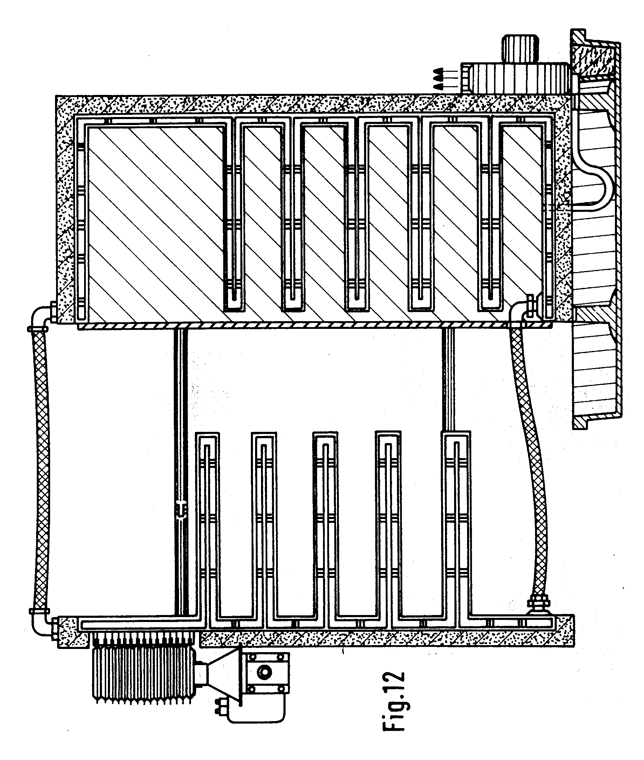

Ein weiteres Ausführungsbeispiel der Erfindung ist in den Fig. 8 bis 11 dargestellt. Vom Prinzip ist der Heizungskessel ähnlich aufgebaut wie der in den Fig. 1 bis 7 beschriebene, jedoch weist dieser Heizungskessel den Unterschied auf, daß dieser nicht zylinderförmig, sondern quaderförmig ausgebildet ist.

Wie aus den Fig. 8 bis 11 hervorgeht, besteht der Heizungskessel 39 aus zwei Hälften 40, 41, wobei die Hälfte 41 als Tür ausgebildet ist, die an der Hälfte 40 schwenkbar angeordnet ist. Der Brenner 42 ist im oberen Bereich angeordnet, wobei die Abgasführung mäanderförmig, wie dies in Fig. 8 eingezeichnet ist, von oben nach unten verläuft und die Brenngase in einem Abgassammelkanal 44 gesammelt und von einem Abgasventilator 43 abgesaugt werden. Die Wasserführung erfolgt umgekehrt, d.h. von unten nach oben, wobei der Heizungsrücklauf beiden Hälften 40, 41 getrennt über Anschlußstücke 45, 46 zugeführt wird. In der Hälfte 41 strömt dann das Wasser in dem in der Wand 47 angeordneten Kanal 48 bis zum ersten Querverteiler 49, in dem eine Trennwand 50 angeordnet ist,die bis kurz vor die Stirnwand 51 des Querverteilers 49 reicht, so daß das Wasser gezwungen wird, bis zur Stirnwand des Querverteilers zu strömen. Im Anschluß hieran strömt es im Querverteiler in entgegengesetzter Richtung wieder zurück zu einem weiteren Kanal 48 in der Wand 47 und zum nächsten Querverteiler 49 usw., bis es schließlich im oberen Bereich im Bereich des Brennraumes 52 über den Heizungsvorlauf wieder abgeführt wird.

Während die Hälfte 41 des Heizkessels 39 fächerförmige Querverteiler aufweist, hat die Hälfte 40, wie dies insbesondere auch aus Fig. 9 hervorgeht, taschenförmige Führungsmittel 53, in denen gleichfalls Trennwände 54 eingesetzt sind, die bis kurz vor die entsprechende Stirnwand 55 führen, so daß das Wasser auch hier gezwungen ist, bis zur Stirnwand 55 zu strömen, um dann im selben Führungselement in entgegengesetzter Richtung zur Wand zurückzuströmen. An der Rückwand sind gleichfalls Kanäle 56 angeordnet, die das Wasser von einem Führungsmittel 53 zum nächstfolgenden Führungsmittel leiten. Auch hier strömt das Wasser von unten nach oben und wird im Bereich des Brennraumes 52 in den Heizungsvorlauf eingespeist.

Für das Auffangen des Kondensats dient eine Kondensatwanne 57. Die beiden Hälften 40, 41 sind des weiteren mittels einer umlaufenden Dichtung 58 gegeneinander abgedichtet und mittels Schnellverschlüssen 59 miteinander verbunden.

Ein vorstehend beschriebener Heizungskessel ist einfach im Aufbau und gestattet es, bei einer mäanderförmigen Heizgasführung großflächige Wärmetauscher anzuordnen, die zudem leicht von außen zugänglich und damit zu reinigen sind.

## Patentansprüche

1. Zweiteiliger Heizungskessel mit einem Brennraum (52), einer Brenneröffnung, einer Öffnung (18) für die Abführung der Rauchgase, einer zwangsweisen Rauchgasführung im Heizungskessel, mit die Rauchgasführung umgebenden Wärmetauschern (30, 31), jeweils mit Anschlüssen für den Vor- und Rücklauf des Heizmediums, die an jeder Hälfte (2, 3) an je einer der einander gegenüberliegenden und zum Heizungsinnenraum weisenden Wände (28, 29) angeformt sind, etwas kürzer als der lichte Innenraum des Heizkessels (1) sind, und in einem vorbestimmten Abstand vor der gegenüberliegenden Wand enden, wobei die Wärmetauscher (30, 31) der beiden Hälften (2, 3) zueinander versetzt angeordnet sind, so daß ggf. mit Ausnahme der Endbereiche ein Wärmetauscher (30) einer Hälfte mit Abstand zwischen zwei Wärmetauscher (31) der benachbarten Hälfte greift, und jede Hälfte (2, 3) des Heizungskessels (1) mit je einem Heizungsvor- und -rücklauf (6, 8, 9) versehen ist, dadurch **gekennzeichnet,** daß die beiden Hälften unter Zwischenschaltung einer umlaufenden Dichtung (25) miteinander verbunden sind, daß die Rauchgase gegen die Strömungsrichtung des Heizungsvor- und -rücklaufes (6,8,9) strömen, und daß die eine Wand (28) bei angeschlossenem Heizungsvorlauf und Heizungsrücklauf zur Freilegung des gesamten Rauchgaskanales (39, 40) von der anderen Wand (29) abrückbar ist.

2. Heizungskessel nach Anspruch 1, dadurch gekennzeichnet, daß die Brenneröffnung (14) und die Öffnung (18) für die Abführung der Rauchgase einander gegenüberliegend mittig im Heizungskessel (1) angeordnet sind, daß jeder Wärmetauscher (30, 31) aus einem Ring besteht, der konzentrisch zur Brenner- und Rauchgasöffnung (14, 18) angeordnet sind, daß jeder Wärmetauscherring im Bereich der Einleitung und Ableitung des Heizungsmediums über seine Länge über eine radial verlaufende Wand unterteilt ist und daß die Ableitung des jeweils außen liegenden Ringes einer Wand mit der Zuleitung des nächstinnen liegenden Ringes der gleichen Wand über einen Verbindundungskanal (34, 35) verbunden ist.

3. Heizungskessel nach Anspruch 2, dadurch gekennzeichnet, daß oder Verbindungskanal (34, 35) in der jeweiligen Wand (28, 29) der Heizungskesselhälfte (2, 3) ausgebildet ist.

4. Heizungskessel nach einem der Ansprüche 2 oder 3, dadurch gekennzeichnet, daß die beiden Heizungskesselhälften (2, 3) einschließlich der Wärmetauscher und der Verbindungsleitungen einstückig gegossen sind.

5. Heizungskessel nach einem der Ansprüche 2 bis 4, dadurch gekennzeichnet, daß die der Brenneröffnung (14) gegenüberliegende Wand vom Heizungsmedium durchströmt ist.

6. Heizungskessel nach einem der Ansprüche 1 bis 5, dadurch gekennzeichnet, daß die eine Hälfte des Heizungskessels topfförmig und die andere im wesentlichen eben ausgebildet ist und daß die umlaufende Dichtung im äußeren Randbereich des Heizungskessels liegt.

7. Heizungskessel nach einem der Ansprüche 2 bis 6, dadurch gekennzeichnet, daß der Heizungskessel zylinderförmig ausgebildet ist.

8. Heizungskessel nach einem der Ansprüche 1 bis 7, dadurch gekennzeichnet, daß der Heizungskessel (39) quaderförmig ausgebildet ist, daß eine Hälfte (40) des Heizungskessels (39) schubladenförmig mit Wasserführungskanälen an den Wänden und an den schubladenförmigen Teilen und die andere Hälfte (41) als Tür mit vorspringenden Querverteilern (49) ausgebildet ist, die das Heizungswasser führen und in die in der einen Hälfte (40) ausgebildeten Fächer eingreifen, so daß zwischen den Fächern und den Querverteilern (49) mäanderförmige Rauchgasführungen entstehen.

9. Heizungskessel nach Anspruch 8, dadurch gekennzeichnet, daß in den Querverteilern wie auch in den fächerförmigen Wasserführungen Trennwände (50, 54) eingesetzt sind, die eine mäanderförmige Wasserführung erzwingen.

## Claims

1. Two-part heating boiler with a furnace chamber (52), a burner opening, an opening (18) for removing waste gases, a forced waste gas guide in the heating boiler, with heat exchangers (30, 31) surrounding the waste gas guide, in each case with connections for the forward and return path of the heating medium and which are shaped onto each half (2, 3) on in each case one of the facing walls (28, 29) directed towards the boiler interior, are somewhat shorter than the inside space of the heating boiler (1) and terminate at a predetermined distance upstream of the facing wall, the heat exchangers (30, 31) of both halves (2, 3) being reciprocally displaced, so that optionally with the exception of the end regions one heat exchanger (30) of one half engages in spaced manner between two heat exchangers (31) of the adjacent half and each half (2, 3) of the heating boiler (1) is provided with in each case one heating forward and return path (6, 8, 9), characterized in that the two halves are interconnected, whilst interposing an all-round seal (25), that the waste gases flow against the flow direction of the forward and return path (6, 8, 9) and that one wall (28) with heating forward and return path connected can be moved away from the other wall (29) for exposing the entire waste gas flue (39, 40).

2. Heating boiler according to claim 1, characterized in that the burner opening (14) and the opening (18) for removing the waste gases are arranged in centrally facing manner in the heating boiler (1), that each heat exchanger (30, 31) comprises a ring, arranged concentrically to the burner and waste gas opening (14, 18), that each heat exchanger ring is subdivided over its entire length by means of a radially directed wall in the vicinity of the heating medium introduction and removal and that the removal of the in each case outer ring of a wall is linked with the supply of the next-inner ring of the same wall via a connecting channel (34, 35).

3. Heating boiler according to claim 2, characterized in that the connecting channel (34, 35) is constructed in the wall (28, 29) of the heating boiler half (2, 3).

4. Heating boiler according to one of the claims 2 or 3, characterized in that the two heating boiler halves (2, 3), including the heat exchanger and the connecting lines are cast in one piece.

5. Heating boiler according to one of the claims 2 to 4, characterized in that the wall facing the burner opening (14) is traversed by the heating medium.

6. Heating boiler according to one of the claims 1 to 5, characterized in that one half of the heating boiler is cup-shaped and the other substantially planar and that the all-round seal is located in the outer marginal area of the heating boiler.

7. Heating boiler according to one of the claims 2 to 6, characterized in that the heating boiler is cylindrical.

8. Heating boiler according to one of the claims 1 to 7, characterized in that the heating boiler (39) is parallelepipedic, that one half (40) of the heating boiler (39) is drawer-shaped, being constructed with water ducts on the walls and on the drawer-shaped parts and the other half (41) is constructed as a door with projecting transverse distributors, which guide the heating water and engage in the fans constructed in one half (40), so that between the fans and the transverse distributors (49) meander-shaped waste gas guides are formed.

9. Heating boiler according to claim 8, characterized in that partitions (50, 54) are inserted in the transverse distributors and in the fan-shaped water guides, which force a meander-shaped water guidance.

## Revendications

1. Chaudière de chauffage en deux parties avec une chambre de combustion (52), un orifice de brûleur, un orifice (18) pour l'évacuation des gaz de fumée, une conduite forcée de gaz de fumée dans la chaudière de chauffage, avec des échangeurs thermiques (30, 31) qui entourent la conduite de gaz de fumée, respectivement avec des raccords pour l'aller et le retour de l'agent de chauffage qui sont moulés sur chaque moitié (2, 3) sur chacune des parois (28, 29) opposées l'une à l'autre et orientées vers l'intérieur du chauffage et qui sont un peu plus courts que l'intérieur libre de la chaudière de chauffage (1) et se terminent à une distance donnée devant la paroi opposée, les échangeurs thermiques (30, 31) des deux moitiés (2, 3) étant placés en étant décalés l'un par rapport à l'autre si bien que, le cas échéant, à l'exception des zones d'extrémité, un échangeur thermique (30) d'une moitié a prise avec un écart entre deux échangeurs thermiques (31) de la moitié voisine et chaque moitié (2, 3) de la chaudière de chauffage (1) étant pourvue respectivement d'un aller et d'un retour de chauffage (6, 8, 9), **caractérisée en ce** que les deux moitiés sont reliées l'une à l'autre en intercalant une étanchéité périphérique (25), que les gaz de fumée affluent contre le sens d'afflux de l'aller et du retour du chauffage (6, 8, 9) et que l'une des parois (28) peut être détachée de l'autre paroi (29), l'aller et le retour chauffage étant raccordé, pour libérer l'ensemble de conduite de gaz de fumée (39, 40).

2. Chaudière de chauffage selon la revendication 1, **caractérisée en ce** que l'orifice du brûleur (14) et l'orifice (18) pour l'évacuation des gaz de fumée sont placés au centre de la chaudière de chauffage (1) en étant en face l'un de l'autre, que chacun des échangeurs thermiques (30, 31) est composé d'un anneau qui est placé de manière concentrique par rapport à l'orifice du brûleur et du gaz de fumée (14, 18), que chaque anneau échangeur thermique est divisé dans la zone de l'introduction et de l'évacuation de l'agent de chauffage sur sa longueur par une paroi dans le sens radial et que l'évacuation de l'anneau d'une paroi qui est respectivement situé vers l'extérieur est reliée à la conduite d'amenée de l'anneau immédiatement plus à l'intérieur de la même paroi par un canal de jonction (34, 35).

3. Chaudière de chauffage selon la revendication 2, **caractérisée en ce** que le canal de jonction (34, 35) est configuré dans la paroi respective (28, 29) de la moitié de chaudière de chauffage (2, 3).

4. Chaudière de chauffage selon l'une des revendications 2 ou 3, **caractérisée en ce** que les deux moitiés de chaudière de chauffage (2, 3), les échangeurs thermiques et les conduites de jonction y compris, sont coulées en une pièce.

5. Chaudière de chauffage selon l'une des revendications 2 à 4, **caractérisée en ce** que la paroi opposée à l'orifice du brûleur (14) est traversée par l'agent de chauffage.

6. Chaudière de chauffage selon l'une des revendications 1 à 5, caractérisée en ce que l'une des moitiés de la chaudière de chauffage est configurée en forme de pot et que l'autre est substantiellement plate et que l'étanchéité périphérique se trouve dans la zone marginale extérieure de la chaudière de chauffage.

7. Chaudière de chauffage selon l'une des revendications 2 à 6, **caractérisée en ce** que la chaudière de chauffage est configurée en forme de cylindre.

8. Chaudière de chauffage selon l'une des revendications 1 à 7, **caractérisée en ce** que la chaudière de chauffage (39) est configurée en forme de parallélépipède, qu'une moitié (40) de la chaudière de chauffage (39) est configurée en forme de tiroir avec des canaux de conduction de l'eau sur les parois et sur les parties en forme de tiroir et que l'autre moitié (41) est configurée comme porte avec des répartiteurs transversaux qui font salle (49) qui guident l'eau de chauffage et dans lesquels les compartiments configurés dans l'une des moitiés (40) s'engrènent de telle manière qu'il se forme des conduites de gaz de fumée en forme de méandres entre les compartiments et les répartiteurs transversaux (49).

9. Chaudière de chauffage selon la revendication 8, **caractérisée en ce** que des cloisons (50, 54) qui forcent une conduction de l'eau en forme de méandres sont mises en place dans les répartiteurs transversaux ainsi que dans les conduites d'eau en forme de compartiments.
